# EUROPÄISCHE PATENTANMELDUNG

(11) **EP 0 637 558 A1**
(43) Veröffentlichungstag der Anmeldung: **08.02.1995**
(21) Anmeldenummer: 93112552.0
(22) Anmeldetag: 05.08.1993
(51) Int. Cl.: B65G 27/28

(54) **Verfahren zum Behandeln von Gut mittels Schwingungserregung sowie Schwingmaschine zur Durchführung des Verfahrens**

(71) Anmelder: CARL SCHENCK AG, D-64293 Darmstadt (DE)
(72) Erfinder: Axt, Werner, D-64297 Darmstadt (DE); Bahn, Gerhard, D-64354 Reinheim (DE); Busch, Klaus, D-64291 Darmstadt (DE); Lenart, Coloman, Dr., D-64319 Pfungstadt (DE); Lohe, Rainer, Dr., D-64846 Gross-Zimmern (DE); Sättler, Heinz, D-67229 Gerolsheim (DE); Schweitzer, Klaus, D-64291 Wixhausen (DE); Wagner, Joachim, D-63755 Alzenau (DE)
(74) Vertreter: Brandt, Ernst-Ulrich, Dipl.-Phys., Dipl.-Ing.

(57) **Zusammenfassung**

Bei einem Verfahren zum Behandeln von Gut mittels Schwingungserregung des Gutträgers (1) wird zur Lösung der Aufgabe den negativen Einfluß einer elastischen Durchbiegung einer Schwingmaschine in Bearbeitungslängsrichtung und quer hierzu auf die Güte des zu bearbeitenden Gutes auszuschalten vorgeschlagen, bei einem in Behandlungsrichtung langen Gutträger (1) und quer hierzu Schwingungserreger auf diesen einwirken zu lassen und die Schwingungsphase und/oder die Schwingungsfrequenz der einzelnen Schwingungserreger (2,7,8) unabhängig voneinander zu verändern. Darüberhinaus wird eine Schwingmaschine zur Durchführung des Verfahrens mit mindestens einem Schwingungserreger zum Beeinflussen von auf der Schwingmaschine befindlichem Gut vorgeschlagen.

## Beschreibung

Die Erfindung betrifft ein Verfahren zum Behandeln von Gut mittels Schwingungserregung des Gutträgers und eine Schwingmaschine zur Durchführung des Verfahrens mit mindestens einem Schwingungserreger zum Beeinflussen von auf der Schwingmaschine befindlichem Gut.

Bekannte Schwingmaschinen benutzen als Erreger entweder mechanische Schwingungserreger, bei welchen durch Einwirken mindestens einer umlaufenden Unwucht auf die Schwingmaschine diese in Schwingung versetzt werden kann, so daß darauf befindliches Gut entweder gefördert oder einer sonstigen Bearbeitung, wie Verdichtung, Siebung, unterworfen wird. Zum selben Zweck werden auch magnetische Schwingungserreger eingesetzt, die gegenüber den mechanischen Schwingerregern phasen- und frequenzstarr arbeiten. Aufgrund dieser Tatsachen können bisher bei langen Schwingmaschinen, d. h. bei Schwingmaschinen, die in Förderrichtung oder in Bearbeitungsrichtung eine große Länge aufweisen, mehrere derartiger Magneterreger hintereinander angeordnet werden.

Bei der Bearbeitung bzw. dem Transport schwerer Güter bzw. großer Maschineneinheiten können mehrere mechanische Erreger in eine Ebene senkrecht zur Bearbeitungsrichtung angeordnet werden; erforderlich ist es hierbei jedoch, daß diese mehreren Erreger mit Gelenkwellen verbunden sind, so daß die Erreger mit gleicher Frequenz und gleicher Phasenlage der Unwuchten betrieben werden können.

Bei der Verwendung von Magneterregern in einer Ebene senkrecht zur Bearbeitungsrichtung ist eine Verbindung der einzelnen Erreger mittels Gelenkwellen nicht erforderlich, da diese zwangsläufig, wie oben bereits ausgeführt, auch frequenzstarr sind.

In Abhängigkeit der oben deffinierten Länge der Schwingmaschine wird aus dem zunächst als starr angesehenen Gutträger ein Gutträger, dessen kritische Eigenschwingungsfrequenz ein niedrigeres Niveau erreicht als die Eigenschwingungsfrequenz einer kürzeren, noch als starr geltenden Schwingmaschine. Aufgrund dieser Tatsache wird die Schwingmaschine auch bei einer Erregung durch unterkritische Schwingungen selbst zu zusätzlichen Eigenschwingungen angeregt, welche eine Verformung der Schwingmaschine in Bearbeitungsrichtung verursachen. Derartige Eigenschwingungen bzw. Verformungen führen zwangsläufig zu einem schlechten Bearbeitungsergebnis von durch die Schwingmaschine zu bearbeitendem Gut, da in den Schwingungstälern der Schwingmaschine das Gut eine zusätzliche Verzögerung erhält, im Gegensatz zu den Wellenbergen, in deren Bereich das zu bearbeitende Gut eine höhere Geschwindigkeit einnimmt als es bei einer starren Schwingmaschine zu erwarten ist, bei der die Geschwindigkeit eines zu fördernden Guts über die gesamte Läge gleich bleibt; oder bei Verdichten von Gut über die gesamte Schwingmaschine ein gleiches Verdichtungsergebnis erreicht wird.

Zufolge der Phasen- und Frequenzstarrheit von Magneterregern läßt sich das Problem der gleichmäßigen Geschwindigkeit oder Verdichtung insbesondere über die große Länge einer Schwingmaschine nicht erreichen, wenn unterschiedliche Behandlungsfrequenzen notwendig sind. Ist die Schwingmaschine auch senkrecht zu ihrer Länge als nicht mehr starr anzusehen, versagt auch hier eine Reihe magnetischer Schwingungserreger, die quer zur Bearbeitungsrichtung angeordnet sind, zufolge ihrer Phasen- und Frequenzstarrheit.

Ausgehend hiervon liegt der vorliegenden Erfindung die Aufgabe zugrunde, den negativen Einfluß einer elastischen Durchbiegung einer Schwingmaschine in Bearbeitungslängsrichtung und quer hierzu auf die Güte des zu bearbeitenden Gutes auszuschalten. Diese Aufgabe wird durch das Verfahren gemäß dem kennzeichnenden Merkmal des Anspruchs 1 gelöst. Durch die gegenseitig unabhängige Regelung der einzelnen Erreger im Hinblick auf ihre Phase und ihre Frequenz bei gleicher Schwingweite werden auftretende Berge und Täler im Gutträger praktisch eingeebnet, so daß auch bei derartigen Schwingmaschinen ein gleichmäßiger und gleichförmiger Durchsatz bzw. eine gleichmäßige und gleichförmige Verdichtung oder beides gemeinsam erreicht wird.

Die kennzeichnenden Merkmale des Anspruchs 2 offenbaren eine Schwingmaschine zur Durchführung des Verfahrens. Durch die gegenseitige Entkopplung der mechanischen Schwingungserreger und durch Regelung ihrer Phase und Frequenz über eine Regeleinheit ist es möglich, durch die Kenntnis der Lage der einzelnen mechanischen Schwingungserreger zur Schwingmaschine jedem einzelnen Schwingungserreger eine derartige Frequenz und/oder Phase zuzuordnen, daß bei gleichbleibender Schwingweite die komplette Schwingmaschine im Behandlungsbereich gerichtet wird, d. h. daß die Schwingmaschine bzw. der Teil der Schwingmaschine, der als Gutträger dient, wie Förderrinne oder Sieb, sich gegenüber dem zu behandelnden Gut wie eine starre Ausführung einer Schwingmaschine verhält.

Durch die kennzeichnenden Merkmale des Anspruchs 3 wird eine andere Lösung der der Erfindung zugrundeliegenden Aufgabe zur Durchführung des Verfahrens offenbart. Hierbei wird ein oder mehrere mechanische oder magnetische Schwingerreger in einer Ebene senkrecht zur Behandlungsrichtung am Gutträger angeordnet und sie dienen zum Transport oder zur Verdichtung des zu bearbeitenden Guts, während im Anfangs- oder Endbereich des Gutträgers der Schwingmaschine mindestens je ein mechanischer Schwingungserreger angeordnet ist, der in Abhängigkeit der Durchbiegung des Gutträgers über eine Regeleinrichtung so mit einer Schwingphase oder Schwingfrequenz beaufschlagt wird, daß ein Richten des langen Gutträgers durchgeführt wird, ohne daß hierdurch eine Beeinflussung der Fördergeschwindigkeit oder der Durchsatzgeschwindigkeit bei einem Sieb oder der Verdichtungsgüte, wie sie durch die Schwingweite des einen Erregers gegeben wird, beeinflußt wird.

In der nachfolgenden Zeichnung wird an einem Ausführungsbeispiel für den Fall einer lediglich in Förderrichtung biegeweichen Schwingmaschine mit einem Gutträger, bei welchem die Verformung quer zur Fortschrittsrichtung vernachlässigbar ist, die Erfindung beschrieben.

Figur 1 zeigt einen Gutträger einer Schwingmaschine gemäß dem Stand der Technik.

Figur 2 zeigt eine Ausführungsform eines Gutträgers einer Schwingmaschine zur Durchführung des erfindungsgemäßen Verfahrens mit einem für die Bearbeitung des Gutes vorhandenen magnetischen oder mechanischen Erregers und zweier Erreger für das Richten des Gutträgers der Schwingmaschine.

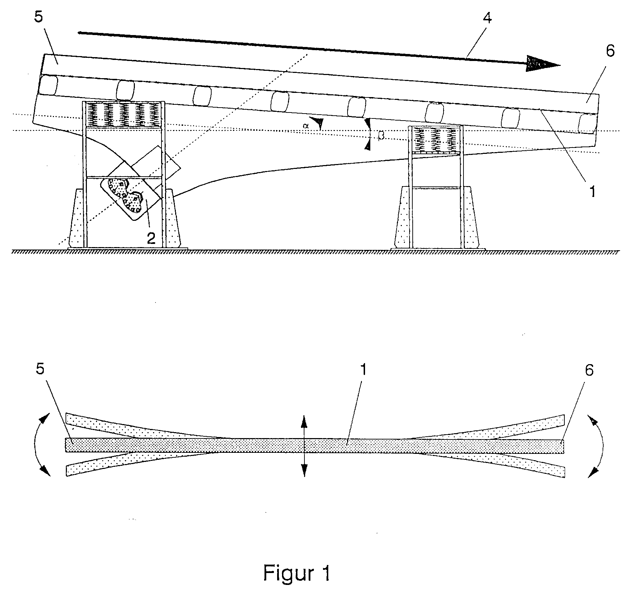

Gemäß Figur 1 wird von einer nicht näher dargestellten Schwingmaschine lediglich ein schwingbarer Gutträger 1 dargestellt, welcher sich über nicht dargestellte Federelemente am Rahmen der nicht dargestellten Schwingmaschine abstützt. Mit dem Gutträger 1 ist ein oder mehrere, je nach durchzusetzender Masse zu bearbeitenden Gutes mechanischer oder magnetischer Erreger 2 in einer Ebene 3 angeordnet, die sich senkrecht zur Bearbeitungsrichtung gemäß Pfeil 4 erstreckt.

Der oder die mechanischen Erreger bewirken den Transport oder die Verdichtung oder den Durchtritt von zu bearbeitendem Material auf oder durch den Gutträger 1.

Zufolge der Länge des Gutträgers 1 führt dieser, angeregt durch die dem zu bearbeitenden Gut zugeführten Bewegungsenergien eine zusätzliche Schwingbewegung aus, die zu einer deutlichen Durchbiegung des Gutträgers 1 am Eintritt 5 und Austritt 6 führt. Dadurch wird beispielsweise in der Mitte periodisch ein Tal oder ein Berg gegenüber dem Eintritt oder dem Austritt 6 entstehen, welches zwangsläufig zu einer zusätzlichen Beschleunigung oder Verzögerung des zu bearbeitenden Gutes führt. Damit wird die Qualität des zu bearbeitenden Gutes negativ beeinflußt.

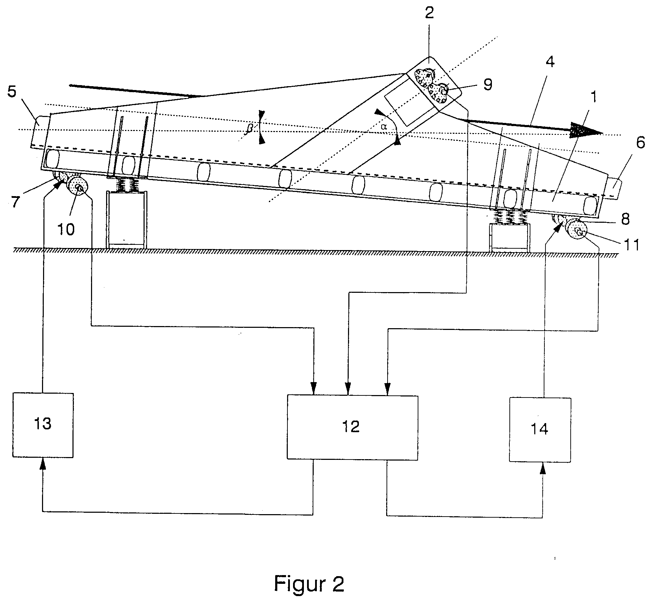

Bei dem in Figur 2 dargestellten Ausführungsbeispiel des Erfindungsgegenstandes werden gleiche Bauteile mit den selben Bezugsziffern, wie in Figur 1 gewählt, verwendet. Am Gutträger 1 ist in der Ebene 3 mindestens ein mechanischer oder magnetischer Erreger 2 angeordnet. Die Anzahl der hier angeordneten mechanischen oder magnetischen Erregern 2 ist davon abhängig, welche Masse über den Gutträger 1 transportiert werden soll.

Um die am Eintritt 5 und Eintritt 6 entstehenden Schwingungen zu bedämpfen, sind in einfachster Ausgestaltung im Bereich des Eintritts 5 und des Austritts 6 weitere zusätzliche mechanische Erreger 7, 8 vorgesehen. Über diese zusätzlichen mechanischen Erreger 7, 8 wird die unerwünschte Biegeschwingung bedämpft dergestalt, daß eine mit der Erregerfrequenz des mechanischen oder magnetischen Erregers 2 gleiche und um maximal 180° phasenverschobene oszillierende Kraft eingeleitet wird. Dadurch werden die unerwünschten Biegeschwingungen, die hervorgerufen werden, durch den mechanischen oder magnetischen Erreger 2 bei einem langen Gutträger, kompensiert.

Dem mechanischen oder magnetischen Erreger 2 ist ein Hauptinkrementalgeber 9 zugeordnet, während dem zusätzlichen Erreger 7 ein erster Inkrementalgeber 10 und dem zusätzlichen mechanischen Erreger 8 ein zweiter Inkrementalgeber 11 zugeordnet ist.

Die Informationen des Hauptinkrementalgebers 9 werden einer Regeleinheit 12 zugeführt, der auch die Informationen des ersten und zweiten Inkrementalgebers 10, 11 zugeführt werden. In der Regeleinheit 12 werden die Ist-Winkel des ersten und zweiten Inkrementalgebers 10, 11 in Verbindung gebracht, mit dem Hauptinkrementalgeber 9 und die hieraus erzeugten Stellwerte werden über einen ersten Frequenzumformer 13 dem zusätzlichen mechanischen Erreger 7 zugeführt und über einen zweiten Frequenzumformer 14 werden die Stellwerte dem zusätzlichen mechanischen Erreger 8 ebenfalls zugeführt.

Aufgrund dieser Stellwerte drehen sich die zusätzlichen mechanischen Erreger 7,8 winkelsynchron mit dem mechanischen oder magnetischen Erreger 2, jedoch um maximal 180° versetzt gegenüber diesem.

Anstelle der in Figur 2 dargestellten Ausführungsform mit insgesamt in drei Ebenen senkrecht zur Gutträgerbearbeitungsachse angeordneten Erregern 2, 7 und 8, bei welcher der oder die mechanischen oder magnetischen Erreger 2 in der Ebene 3 die Transportfunktion bzw. die Verdichtungsfunktion von auf dem Gutträger 1 befindlichem Gut übernehmen und die zusätzlichen mechanischen Erreger 7 und 8 lediglich zur Bedämpfung der Schwingungen des Gutträgers 1 an dessen Eintritts- und Austrittsseite angeordnet sind, wird in der nachfolgenden Figur 3 eine Einrichtung beschrieben, bei der in mehreren senkrechten Ebenen 3, 3' bis 3, 5' ein oder mehrere mechanische Erreger angeordnet sind, welche sowohl den Transport oder die Verdichtung des Gutes übernehmen als auch die Verformung des Gutträgers in Längs- und Querrichtung so beeinflussen, daß der Gutträger trotz seiner Länge und somit einer geringen kritischen Biegefrequenz sich wie ein starrer Gutträger verhält.

## Patentansprüche

1. Verfahren zum Behandeln von Gut mittels Schwingungserregung des Gutträgers (1), dadurch gekennzeichnet, daß bei einem in Behandlungsrichtung langen Gutträger (1) und quer hierzu Schwingungserreger auf diesen einwirken und daß die Schwingungsphase und/oder die Schwingungsfrequenz der einzelnen Schwingungserreger (2, 7, 8) unabhängig voneinander veränderbar sind.

2. Schwingmaschine zur Durchführung des Verfahrens nach Anspruch 1 mit mindestens einem Schwingungserreger (2) zum Beeinflussen von auf einem Gutträger (1) befindlichen Gut, dadurch gekennzeichnet, daß bei einem in Behandlungsrichtung vorhandenen Gutträger (1) großer Länge und einer großen Breite an diesem eine Mehrzahl von voneinander unabhängigen mechanischen Schwingungserregern (7, 8) vorgesehen sind, deren Schwingungsphase und/oder Schwingfrequenz bei gleicher Schwingweite unabhängig voneinander durch eine die Durchbiegung des Gutträgers (1) berücksichtigende Regeleinheit (12) veränderbar ist.

3. Schwingmaschine nach Anspruch 2, dadurch gekennzeichnet, daß die Schwingweite der einzelnen Schwingungserreger (7, 8) unabhängig voneinander regelbar ist.

4. Schwingmaschine zur Durchführung des Verfahrens nach Anspruch 1, insbesondere nach Anspruch 2, dadurch gekennzeichnet, daß bei einer in Behandlungsrichtung großen Länge des Gutträgers (1) mindestens ein mechanischer oder magnetischer Schwingungserreger (2) in einer Ebene (3) für die Behandlung des Guts vorgesehen ist und ein zusätzlicher mechanischer Erreger (7) am Anfang (5) des Gutträgers (1) und ein zusätzlicher mechanischer Erreger (8) am Austritt (6) des Gutträgers (1) vorgesehen sind, die sich winkelsynchron mit dem einen Schwingungserreger (2) drehen, jedoch in ihrer Phasenlage gegenüber dem mindestens einen Schwingungserreger (2) versetzt sind.
